# EUROPÄISCHE PATENTSCHRIFT

(11) **EP 1 036 861 B1**
(45) Veröffentlichungstag und Bekanntmachung des Hinweises auf die Patenterteilung: **15.10.2003**
(21) Anmeldenummer: 00104457.7
(22) Anmeldetag: 06.03.2000
(51) Int. Cl.: C25B 11/04, C25B 3/00

(54) **Verfahren zur elektrochemischen Umsetzung organischer Verbindungen an Diamantelektroden**
Process for the electrochemical conversion of organic compounds on diamond coated electrodes
Procédé pour la conversion de composés organiques utilisant electrodes revêtues de diamant

(30) Priorität: 16.03.1999 DE 19911746
(43) Veröffentlichungstag der Anmeldung: 20.09.2000
(73) Patentinhaber: BASF AKTIENGESELLSCHAFT, 67056 Ludwigshafen (DE); FRAUNHOFER-GESELLSCHAFT ZUR FÖRDERUNG DER ANGEWANDTEN FORSCHUNG E.V., 80636 München (DE)
(72) Erfinder: Pütter, Hermann, Dr., 67433 Neustadt (DE); Weiper-Idelmann, Andreas, Dr., 67165 Waldsee (DE); Merk, Claudia, Dr., 67117 Limburgerhof (DE); Fryda, Matthias, Dr., 38110 Braunschweig (DE); Klages, Claus-Peter, Dr., 38102 Braunscweig (DE); Schäfer, Lothar, Dr., 38527 Meine (DE); Hampel, Alexander, 38114 Braunschweig (DE)
(74) Vertreter: Isenbruck, Günter, Dr.

(56) Entgegenhaltungen:
- DE-A- 19 603 093
- CHEMICAL ABSTRACTS, vol. 128, no. 5, 2. Februar 1998 (1998-02-02) Columbus, Ohio, US; abstract no. 54601, RAMESHAM, R. ET AL: "Kinetic studies of hydroquinone/quinone at the boron-doped diamond electrode by cyclic voltammetry" XP002142755 & J. MATER. SCI. LETT. (1997), 16(20), 1693-1699 , 1997,

## Beschreibung

Die vorliegende Erfindung betrifft ein Verfahren zur elektrochemischen Umsetzung organischer Verbindungen an Diamantelektroden, die gegenüber aggressiven Materialien resistent sind.

Kohlenstoffelektroden, wie Graphit oder neuerdings auch Glaskohlenstoff, sind in der Elektrochemie bekannt und werden aufgrund ihrer relativ guten elektrischen Leitfähigkeit industriell genutzt. Diamant als weitere Modifikation des Kohlenstoffs besaß bisher aufgrund seines geringen Vorkommens und seiner Eigenschaft als Isolator keine große Bedeutung in der industriellen Anwendung.

Es stellte sich aber zwischenzeitlich heraus, daß besonders modifizierte Diamantelektroden sich in organischen Lösungsmitteln, wie Methanol, THF, DMF oder Acetonitril in Reaktivität und Selektivität ähnlich den konventionellen Graphitelektroden verhalten. Insofern können die Vorteile der mit Diamant beschichteten Elektroden nutzbar gemacht werden. Dies ist vor allem das inerte chemische Verhalten gegenüber aggressiven Chemikalien (z.B. Fluorwasserstoff). Weiterhin zeigen Diamantelektroden den Vorteil, daß ein breiter Potentialbereich nutzbar gemacht werden kann, in Wasser beispielsweise in einem Bereich von -1.2 V bis 2.3 V, ohne daß das Lösungsmittel angegriffen wird. Neben den Vorteilen des Diamants gegenüber Graphit lassen sich auch die Nachteile des Graphits durch Verwendung von Diamantelektroden beseitigen. Dies sind zum einen die mechanischen Nachteile des Graphits, wie zum Beispiel Abrasion und Quellung der nichtkristallinen Schichten, zum anderen die chemischen Nachteile wie beispielsweise Korrosion, vor allem gegenüber Wasser, Intercalation von organischem Material in die Graphitschichten, die Schichtgitteraufweitung bei Hydrierungen und die mögliche Oxidation des Graphits. Bei der Umsetzung organischer Verbindungen kamen bislang überwiegend Graphitelektroden zur Anwendung. So werden zum Beispiel in einer Kapillarzelle, die von Beck und Guthke im Jahr 1969 entwickelt wurde, elektrochemische Oxidationen an Graphitelektroden, wie z.B. die Methoxylierung von Furan zu Dimethoxydihydrofuran oder die Kolbeelektrolyse von Adipinsäuremonoestem zu 1,10-Sebacinsäureestern, durchgeführt. Bei Verwendung von Graphit können allerdings durch die rauhe Oberfläche und den Graphitabrieb während der Elektrolyse Graphitpartikel zu Kurzschlüssen führen. Graphitblöcke, die mit Metallfolien überzogen werden, haben sich als zu wenig stabil herausgestellt. Die Metallfolien wellen sich und platzen *ab (F. Wenisch, H. Nohe, H. Hannebaum, D. Degner, R.K. Horn, M. Stroezel, AlChE Symposium Series 1979, 75, 14; H. Nohe, AlChE Symposium Series 1979, 75, 69).* Daneben sind zahlreiche Oxidationen von Aromaten an Graphit bekannt *(D. Degner*, *Topics in Current Chemistry 1988, 148, 3-95).* Aus dem US-Patent US 5,399,247 ist der Abbau von organischen Verbindungen im Abwasser unter Einsatz von Diamantelektroden bekannt. Gemäß dieser Patentschrift verläuft der Abbau wäßriger organischer Restkomponenten, wie beispielsweise von Hydrochinon, sehr gut. Auch Phenol läßt sich sehr gut an Diamantelektroden abbauen. Zur präparativen Synthese organischer Verbindungen wurden Diamantelektroden allerdings bislang nicht eingesetzt. Dies lag unter anderem daran, daß man bisher nicht in der Lage war, ausreichend große Flächen von Elektrodenflächen mit Diamant zu beschichten. Außerdem waren die Schichten in organischen Lösungsmitteln bisher nicht stabil genug.

Die hauptsächlichen Einsatzgebiete von Diamantschichten lagen bislang im Werkzeugbau, oder im Falle der elektrisch leitfähigen Diamantschichten auch im Bereich der Sensorik. In der Elektrochemie finden sie weiterhin Anwendung als Elektrodenmaterial, so zum Beispiel zur Reduktion von Nitrat zu Ammoniak.

Das US-Patent US 5,399,247 beschreibt, wie oben bereits kurz erwähnt, beispielsweise die Anwendung von Diamantelektroden zum Abbau von Industrieabwasser am Beispiel von Photo-Entwickler-Bädern. Die JP 09013188 betrifft die Nutzung von Oxidation, Reduktion und Halogenierung zur Modifizierung der Oberflächen der Diamantelektroden.

Aus der deutschen Offenlegungsschrift DE 196 03 093 A1 ist eine elektrisch isolierende Diamantelektrode bekannt, die in korrosiven Flüssigkeiten oder Gasen zur Füllstandsmessung verwendet werden kann.

Es sind auch Bor-dotierte Diamantelektroden bekannt, mit denen kinetische Untersuchungen zum Redoxverhalten von Hydrochinon/Chinon mittels Cyclovoltammetrie durchgeführt wurden (J. Mater. *Sci.* Lett. (1997), 16(20), 1693-1699).

Weiterhin gibt es zahlreiche Studien über Diamantelektroden mit Anwendung in der Analytik für Cyclische Voltametrie (CV). Hier benötigen die Diamantelektroden nur eine sehr kleine Fläche von etwa 10 mm² oder Drähte mit einer Länge im mm-Bereich und auch nur eine sehr dünne, durch einfache Beschichtung erhaltene Diamantschicht. Hierbei wird die Eigenschaft der Passivierung des beschichteten Metalls, wobei es sich in der Regel um Titan handelt, in Wasser genützt. In organischen Medien, selbst mit geringfügigen Wassergehalten gelingt eine solche Passivierung nicht. Insofern sind die Elektroden hier nicht ausreichend resistent gegenüber aggressiven Materialien. Diese Art Diamantelektroden war somit nicht geeignet, um sie bei Umsetzungen organischer Verbindungen einzusetzen. Hier sind großflächige, nahezu porenfreie und dichte Diamantschichten auf den entsprechenden Trägerelektroden nötig.

Bezüglich der Herstellung von Diamantschichten wurden parallel zu der Hochdruck/Hochtemperatur-Synthese (HPHT-Synthese) auch Niederdruckverfahren zur Herstellung von Diamant entwickelt, die zunächst als unwirtschaftlich erachtet und nicht weiter verfolgt wurden. Beruhend auf diesen frühen Arbeiten wurden in den achtziger Jahren aktivierte Gasphasen -Depositionsverfahren (chemical vapor deposition, CVD) zur Synthese von Diamantschichten bis zur Marktreife entwickelt.

In Anbetracht des obigen Stands der Technik lag die Aufgabe der vorliegenden Erfindung darin, ein Verfahren zur elektrochemischen Umsetzung organischer Verbindungen an einer Diamantelektrode, die gegenüber aggressiven Materialien resistent ist, zur Verfügung zu stellen.

Diese Aufgabe konnte durch ein Verfahren zur elektrochemischen Umsetzung mindestens einer organischen Verbindung gelöst werden, das dadurch gekennzeichnet ist, dass die mindestens eine organische Verbindung mit einer Elektrode in Kontakt gebracht wird, die aus einem Grundkörper und einer auf dem Grundkörper aufgebrachten Diamantschicht besteht, wobei die Diamantschicht porenfrei ist und einen Borgehalt zwischen 10 ppm und 10000 ppm aufweist, und die Elektrode nach einem Verfahren herstellbar ist, das mindestens die folgenden Schritte umfasst:
(a) Reinigen der Oberfläche des Grundkörpers,
(b) Bekeimen der Oberfläche des Grundkörpers mit einer Diamantkeimdichte ≥10¹⁰/cm²,
(c) Beschichten der Oberfläche des Grundkörpers mit Diamant.

Durch diese Vorgehensweise bei der Herstellung der Elektrode wird die Ausbildung von Poren in der Diamantschicht verhindert, bzw. weitgehend unterdrückt. Poren traten bei bisher bekannten Beschichtungen mit Diamant in vergleichsweise sehr hoher Zahl auf. Derartige Poren entstehen beim Beschichtungsprozess durch Verunreinigungen auf der zu beschichtenden Oberfläche. Diese Bereiche können von der Diamantschicht nicht überwachsen werden, so daß nicht beschichtete und damit korrosionsanfällige Bereiche an der Oberfläche des zu beschichtenden Grundkörpers vorliegen.

Erst durch die Bekeimung mit einer hohen Diamantkeimdichte und vorzugsweise mehrmaliges, d.h. mindestens zweimaliges Beschichten der Oberfläche des Grundkörpers mit Diamant (Schritt c)), gekoppelt mit einer angemessenen Reinigungsprozedur vor jedem Beschichtungsschritt ist es möglich geworden, eine angemessen großflächige, porenfreie und dichte Diamantschicht auf der Oberfläche des entsprechenden Grundkörpers und somit eine für die Anwendung bei der Umsetzung organischer Verbindungen geeignete Elektrode zu schaffen. Durch das Verfahren ist es möglich, geeignete Diamantschichten von einer Fläche bis zu 300.000 mm², vorzugsweise mit einer Fläche im Bereich von 3.000 bis 300.000 mm², weiter bevorzugt 10.000 bis 300.000 mm², herzustellen. Porenfreiheit bedeutet im Rahmen der Erfindung, daß keine Pore nachweisbar ist. Die Kontrolle der Porosität wird durch Aufbringen von Flußsäure auf die hergestellte Diamantschicht vorgenommen, wobei es bei Anwesenheit von Poren instantan zu einer erheblichen Wasserstoffbildung kommen würde. Durch das Verfahren werden Diamantschichtdicken für technische Elektrodenmaterialien in einem Bereich von 1 µm bis 50 µm hergestellt.Bei Siliciumelektroden werden Diamantschichten mit einer Dicke von 0,25 µm bis 10 µm möglich.

Vorzugsweise wird im Falle von glatten Elektrodenoberflächen der Elektrodengrundkörper vor dem ersten Reinigungsschritt, vorzugsweise mechanisch aufgerauht. Dies geschieht vorzugsweise durch Sandstrahlen, vorzugsweise mit einem Druck von 5 bis 7 bar. Durch diese Aufrauhung der Oberfläche wird zunächst eine möglichst gute Verankerung der noch aufzubringenden Diamantschicht erzielt. Bei der Verwendung von Graphit für den Grundkörper ist ein Aufrauhen hingegen nicht notwendig, da hier bereits im Ausgangszustand eine ausreichende Rauhigkeit gegeben ist. Eine gewisse Rauhigkeit ist notwendig, um eine ausreichende Haftfestigkeit zu erzielen. Die dadurch gegebene mechanische Verankerung ist besonders bei Materialien mit großem thermischen Ausdehnungskoeffizienten notwendig.

Anschließend erfolgt eine Reinigung der Oberfläche des Grundkörpers, z.B. um Sandkörner zu entfernen. Dies erfolgt vorzugsweise mittels einer Ultraschallbehandlung in einem organischen Lösungsmittel, vorzugsweise für die Dauer von etwa 30 Minuten. Das Reinigen ist grundsätzlich notwendig und dient der Konditionierung der Oberfläche der Elektrode für die darauffolgende Beschichtung. Es handelt sich hierbei um in der Beschichtungstechnologie bekannte Verfahren, die jeweils auf die Beschichtung und das Grundkörpermaterial abgestimmt werden.

Zur Vorbereitung der Beschichtung wird nun die Oberfläche des Grundkörpers mit Diamantpulver beaufschlagt, d.h. bekeimt. Zur Erzielung der Porenfreiheit - auch bei geringen Schichtdicken - ist eine möglichst hohe, zum dichten Diamantwachstum führende Keimdichte erforderlich. Man bekeimt hierbei mit einer Diamantkeimdichte ≥ 10¹⁰/cm², vorzugsweise mit einer Diamantkeimdichte, die in einem Bereich von 10¹¹/cm² bis 10¹³/cm² liegt. Dies wird vorzugsweise dadurch erreicht, daß einerseits die Bekeimung eine hohe Anfangskeimdichte auf der Oberfläche erzeugt und andererseits eine Prozeßführung in der Anfangsphase gewählt wird, die ein Auflösen der meist sehr kleinen Keime durch Diffusion in den Grundkörper, durch Reaktion mit dem Grundkörper, beispielsweise durch Karbidbildung und durch Reaktion mit der Gasphase, beispielsweise durch Ätzen durch den in der Gasphase vorhandenen atomaren Wasserstoff, verhindert. In einer bevorzugten Ausführungsform der Erfindung wird dies dadurch erreicht, daß die Bekeimung mit Nano-Diamantpulver im Bereich von 5 nm bis 100 nm erfolgt. Die Bekeimung mit Nano-Diamantpulver erfolgt des weiteren vorzugsweise in einer Suspension mit organischen Lösungsmitteln, bevorzugt Ethanol. Dies wird darüber hinaus in einer bevorzugten Ausführungsform der Erfindung in einem Ultraschallbad durch Aufsprühen und/oder durch Auftragen mit einem "spin coating" Verfahren durchgeführt.

Vorzugsweise ist die Anfangsphase bis zum Beginn des Diamantwachstums möglichst kurz. Dies wird vorzugsweise dadurch erreicht, daß das Substrat erst in Kontakt mit der aktivierten Gasphase kommt, wenn die Beschichtungstemperatur von 500°C bis 950°C, vorzugsweise von 750°C bis 850°C, erreicht ist. Dies wird entweder durch Zusatzheizung des Substrates oder durch Verwendung von Shuttern zur Trennung von Substrat und aktivierter Gasphase möglich.

Vorzugsweise wird im Anschluß an die Bekeimung die Oberfläche des Grundkörpers nochmals gereinigt, bevor es dann zu der eigentlichen Beschichtung der Oberfläche des Grundkörpers mit Diamant kommt. In manchen Fällen wird die Oberfläche des Grundkörpers nach dem ersten Beschichtungsschritt nochmals gereinigt, vorzugsweise mit Alkohol, insbesondere mit Ethanol für etwa 10 Minuten in einem Ultraschallbad. Für technische und großflächige Substrate ist nämlich zu erwarten, daß aufgrund der Fertigungsbedingungen Restverunreinigungen auf der Oberfläche trotz der Reinigung zurückbleiben. Erst dann erfolgt ein zweiter Beschichtungsschritt der Oberfläche des Grundkörpers mit Diamant.

Allerdings ist zu sagen, daß ein naßchemischer Reinigungsschritt nach der 1. Beschichtung nicht zwingend erforderlich ist. Statt dessen wird vorzugsweise ein 2. Bekeimungsschritt durchgeführt. Aufgrund der Bekeimung mit der Suspension findet einerseits eine Reinigung der Oberfläche statt. Andererseits wird im Falle der Verwendung von Ultraschallbädern eine mechanische Entfernung aller zu Poren führenden Partikel erreicht. Die zusätzliche Bekeimung sorgt andererseits dafür, daß alle noch nicht mit Diamant überwachsenen Stellen mit Diamantkeimen für den 2. Beschichtungsprozeß versehen werden.

Durch das vorzugsweise mindestens zweimalige Beschichten der Oberfläche des Grundkörpers mit Diamant erreicht man nun, daß die nach dem ersten Beschichten noch verbleibenden Poren mit Diamant geschlossen werden und so eine nachweisbar porenfreie Diamantschicht erhalten wird. Im Falle von polierten Oberflächen und staubarmen Umgebungen ist es allerdings vorstellbar, daß ein einmaliger Beschichtungsvorgang ausreicht, um Porenfreiheit zu erreichen. Dies kann insbesondere für Silicium zutreffen.

Vorzugsweise wird Schritt b) mindestens einmal, besonders bevorzugt mehrmals wiederholt, wobei vor jeder Wiederholung von Schritt b) die Oberfläche des Grundkörpers gereinigt, d.h. abgerieben bzw. poliert wird. Dadurch erhält man eine sehr hohe Bekeimungsdichte auf der Oberfläche des Grundkörpers. Diese Bekeimungsdichte kann noch weiter vergrößert werden, indem die Oberfläche des Grundkörpers vorzugsweise mit einem Diamantpulver bekeimt wird, dessen Körnung im Nanometerbereich liegt. Vorzugsweise erstreckt sich der Bereich von 5 nm bis 75 µm, besonders bevorzugt von 0,25 µm bis 3 µm. Die Bekeimung erfolgt dabei vorzugsweise in einer Suspension des Nanodiamantpulvers in Ethanol in einem Ultraschallbad mit einer anschließenden Reinigung in Alkohol, vorzugsweise in Ethanol. Des weiteren kann man auch durch zusätzliches Anlegen einer Bias-Spannung an die zu beschichtende Oberfläche bewirken, daß eine ausreichende Anzahl an Diamantkeimen auf der Oberfläche des Grundkörpers deponiert wird.

Vorzugsweise wird die sich daran anschließende Beschichtung der Oberfläche des Grundkörpers mit Hilfe des bereits in der Einleitung erwähnten CVD-Verfahrens, weiter bevorzugt mit Hilfe des Heißdraht-CVD-Verfahrens durchgeführt. Um für den Beschichtungsprozeß eine hohe Aktivierung der Gasphase zu erreichen, müssen die Temperaturen der Filamente von vorzugsweise 2000°C bis 2400°C erzielt werden. Dieser Verfahrensschritt wird vorzugsweise bei einem Druck von etwa 10 bis 100 mbar, besonders bevorzugt von 10 mbar bis 40 mbar durchgeführt Die Filamentabstände werden so gewählt, daß eine möglichst gleichmäßige Temperaturverteilung erhalten wird. Wie bereits erwähnt wird zur Sicherstellung der Porenfreiheit im Sinne der vorliegenden Erfindung der Beschichtungsprozeß, d.h. Schritt c) mindestens einmal, vorzugsweise mehrfach wiederholt, wobei zwischen diesen Wiederholungen jeweils ein Reinigungsschritt durchgeführt wird. Nach jedem Beschichtungsschritt gemäß Schritt c) des erfindungsgemäßen Verfahrens wird nach Abkühlung der Druck in der Beschichtungskammer vorzugsweise auf Normaldruck erhöht Durch den Druckanstieg werden lose Partikel von der Oberfläche des Grundkörpers entfernt. Durch das wiederholte Beschichten werden die wenigen noch verbleibenden Poren geschlossen.

In einer bevorzugten Ausführungsform des Verfahrens umfaßt der Grundkörper einen Kern und eine auf den Kern aufgebrachte Zwischenschicht, auf die wiederum die Diamantschicht aufgebracht wird. Der Kern besteht hierbei vorzugsweise aus einem oder mehreren der folgenden Substrate, nämlich Graphit und/oder Silicium (Si) und/oder Gold und/oder Titan (Ti) und/oder Molybdän (Mo). Für die Zwischenschicht wird vorzugsweise Gold und/oder Platin und/oder Chrom eingesetzt. Platin hat gegenüber Gold den Vorteil, daß die aufzubringende Diamantschicht bei höheren Temperaturen aufgebracht werden kann, was wiederum eine bessere Phasenreinheit und in der Regel eine höhere Abscheiderate der Diamantschicht zur Folge hat. Diese Zwischenschichten dienen als Diffusionsbarriere für die auf der Oberfläche auftreffenden verschiedenen Kohlenstoffmodifikationen und bieten gleichzeitig auch eine bessere Haftung für die aufzubringende Diamantschicht. Die stattfindenden Oberflächenreaktionen hängen aber neben der Zusammensetzung der Oberfläche auch empfindlich von der Temperatur der Oberfläche ab. Die maximale Substrattemperatur ist im Bereich unter 950°C, abhängig von den zu beschichtenden Materialien. Bei Ti ist sie beispielsweise ≤ 750°C, bei Au ≤ 850°C und bei Ta ≤ 950°C. Beim Beschichten mit Diamant mittels des Heißdraht-CVD-Verfahrens ist eine Obergrenze von 950°C dadurch bedingt, daß die CVD-Diamantabscheidüng stark abnimmt und bei Temperaturen oberhalb von 1100°C nicht mehr stattfindet. Erfindungsgemäß werden der Filamentdurchmesser und die Filamentabstände sowie der Abstand zwischen den jeweiligen Filamenten und dem Substrat optimiert bzw. den Versuchsbedingungen angepaßt.

In einer anderen bevorzugten Ausführungsform des erfindungsgemäßen Verfahrens wird für den Grundkörper Metall verwendet, vorzugsweise ein carbidbildendes Metall oder Silicium (Si). Bei Verwendung carbidbildender Metalle entfällt die zusätzliche Aufbringung einer Zwischenschicht. Während des Beschichtens mit Diamant bildet sich zunächst eine Carbidschicht, auf der sich wiederum der Diamant abscheidet. Dies erfolgt alles in einem Prozeßschritt. Die zwischen Metall- und Diamantschicht gebildete Carbidschicht unterstützt die Haftung der Diamantschicht. Es können hier auch Silicide, Boride und Carbide, so z.B. Siliciumcarbid verwendet werden.

In einer weiteren bevorzugten Ausführungsform des erfindungsgemäßen Verfahrens ist der Borgehalt der Diamantschicht variabel. Während man bisher daran interessiert war möglichst borreiche, homogene Diamantschichten abzuscheiden, um die Leitfähigkeit der Diamantschicht zu maximieren, hat sich nun gezeigt, daß der Borgehalt das Redoxfenster der Diamantelektroden deutlich beeinflußt und zwar derart, daß der Borgehalt das Redoxfenster erheblich verkleinert. Daher wird der Borgehalt erfindungsgemäß variabel gehalten und gleichzeitig möglichst klein gewählt. Er kann zwischen 10 ppm und 10000 ppm variiert werden. Vorzugsweise verwendet man Borgehalte zwischen 10 ppm und 2000 ppm, besonders bevorzugt zwischen 50 ppm und 1000 ppm. Beim Beschichtungsprozeß wird erfindungsgemäß vorzugsweise soviel Trimethylborat zugesetzt, daß das Verhältnis zu Methan 1:1 nicht überschreitet.

In einer weiteren bevorzugten Ausführungsform des erfindungsgemäßen Verfahrens wird die zu beschichtende Oberfläche des Grundkörpers während des Herstellungsverfahrens der Diamantschicht auf dem Grundkörper senkrecht aufgestellt. Es verhindert die Anlagerung von auf das Substrat herunterfallende Partikel während der Abscheidung, beispielsweise von abplatzenden Beschichtungen an den Reaktorwänden. Dadurch läßt sich ergänzend zu der mehrmaligen Beschichtung ebenfalls die Porenfreiheit im Sinne der Erfindung optimieren

Bei der elektrochemischen Umsetzung wird eine Elektrode verwendet, die einen Grundkörper und eine auf dem Grundkörper aufgebrachte Diamantschicht aufweist, wobei die aufgebrachte Diamantschicht porenfrei ist. Der Grundkörper weist dabei vorzugsweise eine oder mehrere der folgenden Materialien auf: Carbide, Silicide und Boride. In einer anderen bevorzugten Ausführungsform besteht der Grundkörper aus einem Metall oder Silicium, besonders bevorzugt aus einem carbidbildenden Metall.

In einer weiteren bevorzugten Ausführungsform der Elektrode umfaßt der Grundkörper einen Kern und eine auf dem Kern aufgebrachte Zwischenschicht. Der Kern enthält dabei vorzugsweise Graphit oder Titan oder Molybdän oder Gold oder eine Kombination aus zwei oder mehr davon. In einer bevorzugten Ausführungsform besteht die auf dem Kern aufgebrachte Zwischenschicht aus Gold oder Platin oder einem Gemisch aus Gold und Platin.

In einer bevorzugten Ausführungsform der Elektrode ist der Borgehalt der Diamantschicht vergleichsweise gering. Vorzugsweise liegt er in einem Bereich von 10 ppm bis 2000 ppm, insbesondere bei 50 ppm bis 1000 ppm.

Die Dicke der Diamantbeschichtung der erfindungsgemäßen Elektrode liegt vorzugsweise in einem Bereich von 1 bis 50 µm, weiter bevorzugt 1 bis 10 µm.

Die vorliegende Erfindung betrifft ein Verfahren zur elektrochemischen Umsetzung mindestens einer organischen Verbindung, wobei die mindestens eine organische Verbindung mit einer Diamantelektrode in Kontakt gebracht wird, wie in Anspruch 4 definiert. Die Erfindung bezieht sich bei Formen der Umsetzung vorzugsweise auf Oxidationen und/oder Reduktionen und/oder elektrochemische Funktionalisierungen von organischen Verbindungen oder Gemischen aus zwei oder mehreren organischen Verbindungen. Hierbei seien insbesondere Halogenierungen, Acetoxylierungen und Methoxylierungen genannt.

Es ist erfindungsgemäß notwendig, daß mindestens eine der verwendeten Elektroden eine Diamantelektrode gemäß der vorliegenden Erfindung ist. Vorzugsweise sind sowohl Kathode als auch Anode eine Diamantelektrode gemäß der vorliegenden Erfindung.

Sofern eine Ausführungsform gewählt wird, bei der lediglich eine Diamantelektrode gemäß der vorliegenden Erfindung eingesetzt wird, kann die andere Elektrode bzgl. des verwendeten Materials und ihrer Form in Abhängigkeit von der Umsetzung und der vorhandenen Chemie frei gewählt werden. Für eine solche Elektrode kann man im allgemeinen perforierte Materialien, wie Netze, Streckmetallbleche, Lamellen, Profilstege, Gitter und glatte Bleche verwenden. Derartige perforierte Materialien werden vorzugsweise auch für den Grundkörper der Diamantelektrode eingesetzt. Bei einer planparallelen Elektrodenanordnung geschieht dies in Form ebener Flächen, bei der Ausführungsform mit kerzenförmigen Elektroden in Form einer zylindrischen Anordnung.

Die Wahl des Werkstoffes der anderen Elektrode bzw. seiner Beschichtung ist abhängig vom Lösungsmittel des Anolyten und/oder Katholyten. So werden in organischen Systemen vorzugsweise Graphitelektroden eingesetzt, während in Wasser enthaltenden Systemen vorzugsweise Werkstoffe oder Beschichtungen mit geringer Sauerstoffüberspannung eingesetzt werden. Für saure Anolyte sind dabei beispielshaft Titan- oder Tantalträger mit elektrisch leitenden Zwischenschichten, auf welche elektrisch leitende Mischoxide der IV bis VI. Nebengruppe aufgebracht werden, die mit Metallen oder Metalloxiden der Platingruppe dotiert sind, zu nennen. Bei basischen Anolyten kommen bevorzugt Eisen- oder Nickelanoden zum Einsatz. Im Falle der Kathoden werden in organischen Systemen ebenfalls Graphit, Edelstahl, Platin oder Nickel bevorzugt. In Wasser enthaltenden Systemen werden vorzugsweise Kupfer, Zink, Nickel, Blei, Edelstahl, Platin und Graphit als Kathodenmaterial eingesetzt.

Im Rahmen des erfindungsgemäßen Verfahrens hat die Art des verwendeten Zellentyps, die Form und die Anordnung der Elektroden keinen entscheidenden Einfluß, so daß prinzipiell alle in der Elektrochemie üblichen Zellentypen verwendet werden können.

Beispielhaft genannt seien die beiden folgenden Apparatevarianten:
a) ungeteilte Zellen
   Ungeteilte Zellen mit planparalleler Elektrodenanordnung kommen bevorzugt dann zum Einsatz, wenn weder Edukte noch Produkte, die an Anode oder Kathode hergestellt oder umgesetzt werden, in störender Weise durch den jeweils anderen Elektrodenprozeß verändert werden oder miteinander reagieren. Vorzugsweise werden die Elektroden planparallel angeordnet, weil bei dieser Ausführungsform bei kleinem Elektrodenspalt (0,5 mm bis 30 mm, vorzugsweise 1 bis 10 mm) eine homogene Stromverteilung gegeben ist. Vorzugsweise können in diesem Fall die Elektroden einzeln oder zu mehreren gestapelt angewendet werden. Im letzteren Fall handelt es sich um die Verwendung von sogenannten Stapelelektroden, die in der sogenannten Plattenstapelzelle seriell bipolar geschaltet werden können und deren eine oder beide Flächen der einzelnen Stapeleinheit mit Diamant beschichtet sein können.
b) geteilte Zellen
   Geteilte Zellen mit planparalleler Elektrodenanordnung oder kerzenförmigen Elektroden kommen vorzugsweise dann zum Einsatz, wenn der Katholyt vom Anolyten getrennt sein muß, um z.B. chemische Nebenreaktionen auszuschließen oder um die nachfolgende Stofftrennung zu vereinfachen. Als Trennmedium können Ionenaustauschermembranen, mikroporöse Membranen, Diaphragmen, Filtergewebe aus nichtelektronenleitenden Materialien, Glasfritten sowie poröse Keramiken eingesetzt werden. Vorzugsweise werden Ionenaustauschermembranen, insbesondere Kationenaustauschermembranen, verwendet, wobei darunter wiederum solche Membranen vorzugsweise verwendet werden, die aus einem Copolymer aus Tetrafluorethylen und einem perfluorierten Monomer, das Sulfogruppen enthält, bestehen. Vorzugsweise werden auch bei geteilten Zellen die Elektroden planparallel angeordnet, da bei dieser Ausführungsform bei kleinen Elektrodenspalten (zwei Spalte zu je 0 mm bis 10 mm, bevorzugt anodisch 0 bis 3 mm, kathodisch 0 bis 3 mm) eine homogene Stromverteilung gegeben ist.

In dem erfindungsgemäßen Verfahren zur elektrochemischen Umsetzung ist es bevorzugt, daß die Spannung im Bereich von 1 bis 100, bevorzugt von 2 bis 50 und besonders bevorzugt von 4 bis 15 V liegt. Es ist vorteilhaft, wenn in dem Verfahren zur elektrochemischen Umsetzung die Spannung so ausgewählt wird, daß die Stromdichte im Bereich von 1 bis 50, bevorzugt von 5 bis 20 und besonders bevorzugt von 8 bis 13 mA/cm² liegt.

Die erfindungsgemäße elektrochemische Umsetzung wird vorzugsweise in einem Temperaturbereich von 0 bis 100, bevorzugt von 10 bis 70 und besonders bevorzugt von 15 bis 55 °C durchgeführt.

Darüber hinaus hat es sich bei der erfindungsgemäßen elektrochemischen Umsetzung bewährt, eine Ladungsmenge im Bereich von 1 bis 10, bevorzugt von 2 bis 7 und besonders bevorzugt von 3 bis 6 F einzusetzen.

Im allgemeinen wird die erfindungsgemäße Umsetzung in Gegenwart eines Hilfselektrolyten vorgenommen. Die Zugabe desselben dient zur Einstellung der Leitfähigkeit der Elektrolyselösung und/oder zur Steuerung der Selektivität der Reaktion. Der Gehalt des Elektrolyten liegt in der Regel bei einer Konzentration von ungefähr 0,1 bis ungefähr 10, vorzugsweise ungefähr 0,2 bis ungefähr 5 Gew.-%, weiter bevorzugt ungefähr 0,5 bis ungefähr 4 Gew.-%, jeweils bezogen auf das Umsetzungsgemisch. Als Hilfselektrolyt kommen Protonensäuren, wie z.B. organische Säuren, wobei Methylsulfonsäure, Benzolsulfonsäure oder Toluolsulfonsäure genannt werden können, und mineralische Säuren, wie z.B. Schwefelsäure und Phosphorsäure, in Betracht. Ferner können als Hilfselektrolyte auch Neutralsalze verwendet werden. Als Kationen kommen dabei Metallkationen von Lithium, Natrium, Kalium, aber auch Tetraalkylammoniumkationen, wie z.B. Tetramethylammonium, Tetraethylammonium, Tetrabutylammonium und Dibutyldimethylammonium in Frage. Als Anionen sind zu nennen: Fluorid, Tetrafluoroborat, Sulfonate, wie z.B. Methylsulfonat, Benzolsulfonat, Toluolsulfonat, Sulfate, wie z.B. Sulfat, Methylsulfat, Ethylsulfat, Phosphate, wie z.B. Methylphosphat, Ethylphosphat, Dimethylphosphat, Diphenylphosphat, Hexafluorophosphat, Phosphonate, wie z.B. Methylphosphonatmethylester und Phenylphosphonatmethylester.

Weiterhin sind auch basische Verbindungen, wie z.B. Alkali- oder Erdalkalimetallhydroxide, -carbonate, -hydrogencarbonate und -alkoholate einsetzbar, wobei als Alkoholatanionen Methylat, Ethylat, Butylat und Isopropylat vorzugsweise eingesetzt werden.

Als Kationen in diesen basischen Verbindungen kommen wieder die oben genannten Kationen in Frage.

Das erfindungsgemäße Verfahren kann nicht nur unter Verwendung einer homogenen Lösung der umzusetzenden organischen Verbindung in einem geeigneten Lösungsmittel durchgeführt werden, sondern auch in einem Zweiphasensystem bestehend aus einer Phase enthaltend mindestens ein organisches Lösungsmittel, wie nachfolgend definiert, und die umzusetzende organische Verbindung, und einer zweiten, wasserhaltigen Phase oder aber in Substanz.

Als Lösungsmittel kommen Einzellösungsmittel oder Lösungsmittelgemische in Betracht. Als Lösungsmittel kommen alle protischen Lösungsmittel in Frage, d.h. Lösungsmittel, die Protonen enthalten oder freisetzen können und/oder Lösungsmittel, die Wasserstoffbrückenbindungen ausbilden können, wie z.B. Alkohole, Amine, Carbonsäuren usw. gegebenenfalls im Gemisch mit aprotisch polaren Lösungsmittel, wie z.B. Tetrahydrofuran, Acetonitril oder letztere als alleiniges Lösungsmittel. Vorzugsweise werden wegen der aufrecht zu erhaltenden Leitfähigkeit niedere Alkohole wie Methanol, Ethanol, 1-Propanol, Isopropanol, 1-Butanol, sec.-Butanol oder tert. Butanol, Ether, wie Diethylether, 1,2-Dimethoxyethan, Furan, Tetrahydrofuran und Dimethylformamid eingesetzt. Weiter kann Wasser den Lösungsmitteln beigemischt sein, wobei ggf. ein Gemisch mit einem oder mehreren der oben genannten Alkohole, Ether, DMF eingesetzt wird, wobei ein Gemisch aus Wasser mit Methanol, THF, Dimethoxyethan oder DMF bevorzugt ist. Neben diesen Alkoholen können auch die korrespondierenden Säuren eingesetzt werden, vorzugsweise Fettsäuren, so z.B. Ameisensäure, Essigsäure, Propionsäure, Buttersäure, Valeriansäure, Capronsäure, Önanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Isobuttersäure, Isovaleriansäure.

Die erfindungsgemäße elektrochemische Umsetzung kann entweder kontinuierlich oder diskontinuierlich durchgeführt werden.

Als organische Verbindungen sind im erfindungsgemäßen Verfahren prinzipiell alle organischen Verbindungen mit elektrochemisch umsetzbaren, insbesondere oxidierbaren, reduzierbaren und funktionalisierbaren Gruppen als Edukte einsetzbar. Dabei können als Produkte, in Abhängigkeit von der insgesamt zugegebenen Strommenge, sowohl teilweise umgesetzte Verbindungen als auch vollständig umgesetzte, d.h. z.B. vollständig oder teilweise reduzierte oder oxidierte Verbindungen erhalten werden. So kann beispielsweise ausgehend von einem Allein das korrespondierende Alken ebenso erhalten werden wie das entsprechende vollständig reduzierte Alkan.

Erfindungsgemäß bevorzugte elektrochemische Umsetzungen sind die Oxidation oder Reduktion. Unter diesen Umsetzungen sind die Arylierung, Alkinylierung sowie die Bildung von Alkoholen, Ethern, Ketonen, Aldehyden, Carbonsäuren, Estern, Olefinen, Amiden und Oxoamiden besonders bevorzugt. Darüber hinaus bevorzugt ist die Halogenierung, insbesondere die Fluorierung, Chlorierung, Bromierung und besonders bevorzugt die Chlorierung.

Durch das erfindungsgemäße Verfahren können insbesondere folgende Klassen organischer Verbindungen reduziert werden:

Organische Verbindungen, die mindestens eine C―C-Doppelbindung aufweisen, wie z.B. ungesättigte Carbonsäuren, aromatische Verbindungen, die durch eine oder mehrere Alkenylgruppen substituiert sind.

Organische Verbindungen, die mindestens eine C―C-Dreifachbindung aufweisen.

Organische Verbindungen, die mindestens einen aromatischen C₆-Ring aufweisen, wie z.B. alle aromatischen monocyclischen oder polycylischen Kohlenwasserstoffe sowie monocyclische substituierte aromatische Verbindungen, wobei insbesondere die Substitution mit Halogen-, Alkyl-, Acyl- und/oder Alkoxygruppen bevorzugt ist.

Organische Verbindungen, die mindestens einen heterocyclischen Ring aufweisen, wie z.B. 5-, 6- oder höhergliedrige, ungesättigte Heterocyclen, die 1 bis 3 Stickstoffatome und/oder ein Sauerstoff- oder Schwefelatom enthalten.

Organische Verbindungen, die mindestens eine Struktureinheit C=X aufweisen, wobei X eine NR₁-Gruppe, Sauerstoff und/oder Schwefel sein kann, wobei R₁ eine Alkylgruppe, eine Arylgruppe, eine Alkoxygruppe, Wasserstoff oder eine Hydroxylgruppe sein kann. Die obige Definition umfaßt alle organischen Verbindungen, die mindestens eine Kohlenstoff-Heteroatom-Doppelbindung aufweisen, wie z.B. Aldehyde, Ketone sowie die entsprechenden Thioverbindungen und Imine.

Organische Verbindungen, die mindestens eine C-N-Dreifachbindung aufweisen, wie z.B. Dinitrile und Mononitrile.

Organische Verbindungen, die eine Struktureinheit C-Z aufweisen. Diese Definition umfaßt alle organischen Verbindungen, die Halogenatome, insbesondere Chlor, Brom und/oder Iod oder eine Oxyalkylgruppe aufweisen, wie z.B. gesättigte Kohlenwasserstoffe oder aromatische Kohlenwasserstoffe, die durch mindestens eine der oben genannten Gruppen substituiert sind.

Ein weiteres erfindungsgemäß bevorzugtes Verfahren ist die Oxidation von Aromaten wie substituierten Benzolen, substituierten Toluolen und substituierten oder unsubstituierten Naphthalinen. Ganz allgemein lassen sich dabei Aromaten der nachstehenden Formel umsetzen: 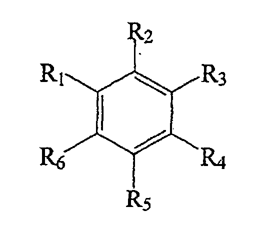 wobei R1, R2, R3, R4, R5 und R6 jeweils unabhängig voneinander H; Alkyl; Aryl; OR, mit R= H, Alkyl, Aryl, CO-R', mit R'=Alkyl und Aryl; COOR, wobei R= H, Alkyl, oder Aryl ist; COR, wobei R= Alkyl, oder Aryl ist, Nitro; F, Cl, Br, I; CONR'R'', wobei R' und R" Alkyl, Aryl und Alkyl- oder Aryloxymethylen und Alkyl- oder Aryloxyethylen sein können; NR'R'', mit R' und R" =H, Alkyl, Aryl, und Alkyl- oder Aryloxymethylen und Alkyl- oder Aryloxyethylen sind; weiterhin können R1 und R2 oder R4 und R5 Teile eines weiteren kondensierten Ringsystems sein, welches aromatisch oder heteroaromatisch sein kann. Die Alkylketten können verzweigt oder unverzweigt sein. In dieser Ausführungsform besonders bevorzugt sind Verfahren zur Alkoxylierung, vorzugsweise Methoxylierung von 4-Methoxytoluol, p-Xylol, p-tert.-Butyltoluol, 2-Methylnaphthalin, Anisol oder Hydrochinondimethylether. Weiterhin bevorzugt ist die Umsetzung von Toluol- und Benzolderivaten, wie z.B. Chlorbenzol, 1,2-Dichlorbenzol, 1,3-Dichlorbenzol, 1,4-Dichlorbenzol und analog die fluorierten, bromierten und iodierten Benzole. Weitere Substrate sind Fluor-, Chlor-, Brom- und Iodtoluole, die ortho-, meta- und para-substituiert sein können, ebenso Nitrobenzole oder Nitrotoluole, insbesondere Nitrobenzol, m-,o-,p-Dinitrobenzol, m-,o-,p-Nitrotoluol, 2,4- und 2,6-Dinitrotoluol oder Monoacetyl- oder Bisacetyl-substituierte Toluole und Benzole.
Die vorgenannten organischen Verbindungen können durch das Verfahren zur elektrochemischen Reaktion auch acyloxyliert werden.

Ein anderes bevorzugtes Verfahren zur elektrochemischen Umsetzung bezieht sich auf die anodische Dimerisierung von substituierten sowie unsubstituierten Benzolen, Toluolen und Naphthalinen, wobei die zuvor genannten organischen Verbindungen vorzugsweise mit C₁- bis C₅-Alkylketten substituiert sind. Vorteilhaft kann das erfindungsgemäße Verfahren auch zur Alkoxylierung, vorzugsweise Methoxylierung oder Hydroxylierung von Carbonylverbindungen, insbesondere von Cyclohexanon, Aceton, Butanon oder substituierten Benzophenonen eingesetzt werden.

Ein anderes bevorzugtes Verfahren ist die Oxidation von Alkoholen oder Carbonylverbindungen zu Carbonsäuren, beispielsweise von Butandiol zu Acetylendicarbonsäure oder von Propargylalkohol zu Propiolsäure.

Weiterhin bevorzugt ist die Kolbereaktion, die elektrochemische Decarboxylierung von aliphatischen Carbonsäuren zur Kupplung der Carbonsäurereste zur Synthese von Alkanen; weiterhin zur Synthese von Alkoholen, Ethern und durch Radikale induzierte Verbindungen. Ein anderes bevorzugtes Verfahren ist die Umsetzung von offenkettigen und cyclischen Kohlenwasserstoffen, um die in Allylstellung methoxylierten und doppeltmethoxylierten Produkte zu erhalten, besonders bevorzugt ist hier die Synthese von Cyclohex-2-enylmethylether oder 1,1 -Dimethoxy-2-cyclohexan ausgehend von Cyclohexan.

Das Verfahren kann vorteilhafterweise auch zur Funktionalisierung von Amiden eingesetzt werden. Besonders geeignete Amide sind in der allgemeinen Formel (I) dargestellt 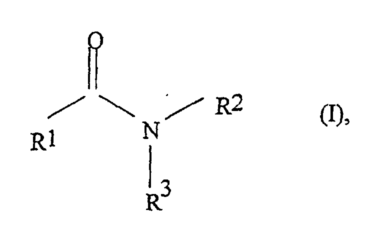 wobei R¹ eine verzweigtkettige oder lineare C₁- bis C₂₀-Alkyl, -Cycloalkyl, Aralkyl-Gruppe, und R² oder R³ unabhängig voneinander eine C₁ bis C₂₀-Alkylgruppe bedeuten. Die Alkoxylierung ist die bevorzugteste Funktionalisierung. Besonders bevorzugt wird Dimethylformamid zu N-Monomethoxymethyl-N-methylformamid umgesetzt.

Ferner eignet sich das erfindungsgemäße Verfahren zur elektrochemischen Reaktion auch zur Oxidation, Reduktion oder Funktionalisierung von Heterocyclen. Bevorzugte Heterocyclen weisen 3 bis 7, bevorzugt 4 bis 6 und besonders bevorzugt 4 bis 5 Kohlenstoffatome auf. Die Heterocyclen können 1 bis 3, bevorzugt 1 bis 2 und besonders bevorzugt 1 Heterogruppe oder Heteroatom aufweisen. Bevorzugte Heterogruppen bzw. Heteroatome sind solche, die NH, O und S aufweisen. Weiterhin ist es bevorzugt, daß die Heterocyclen mindestens eine Doppelbindung, bevorzugt zwei Doppelbindungen aufweisen. Ferner können die Heterocyclen substituiert sein, wobei Halogene und C₁-C₂₀-Alkylgruppen besonders bevorzugte Substituenten sind. Als elektrochemische Umsetzungen an Heterocyclen sind insbesondere die Umsetzung von Tetrahydrofuran zu 2-Monomethoxytetrahydrofuran und 2,5 -Dimethoxytetrahydrofuran oder von Furan zu Dimethoxydihydrofuran sowie die Umsetzung von N-Methylpyrrolidon-2 zu 5-Methoxy-N-Methylpyrrolidon-2 bevorzugt.

Die vorliegende Erfindung soll nunmehr anhand einiger Beispiele erläutert werden.

### Beispiele

### Beispiel 1

In Beispiel 1 wird eine Möglichkeit der Herstellung einer Ausführungsform einer Diamantelektrode für die elektrochemische Umsetzung aufgezeigt. Dabei wird ein graphitischer Grundkörper galvanisch mit einer dünnen (10-50 nm), metallischen Zwischenschicht (Au, Pt, Cr) versehen, um unter Beschichtungsbedingungen, d.h. unter Anwesenheit einer hohen Konzentration von atomarem Wasserstoff, keine undefinierte Ätzung des Grundkörpers zu erhalten und eine gute Haftung der Diamantschicht zu erzielen. Die Vorbekeimung der Elektroden erfolgt in einer Suspension von Nanodiamantpulver in Ethanol in einem Ultraschallbad mit einer anschließenden Reinigung in Ethanol. Für den Beschichtungsprozeß muß eine hohe Aktivierung der Gasphase durch Temperaturen der Filamente von 2000°C bis 2400°C erzielt werden, wobei substratseitig die Temperaturen aufgrund der metallischen Zwischenschicht nicht höher als 850°C sein sollen. Hier werden die Filamentdurchmesser, die Filament-Abstände und die jeweiligen Abstände zwischen den Filamenten und dem Substrat entsprechend angepaßt. Der Gasphase, die zu etwa 99% aus molekularem Wasserstoff besteht, wird soviel Trimethylborat zugesetzt, daß das Verhältnis zu Methan 1:1 nicht überschreitet, bevorzugt liegt das Verhältnis bei 1:2. Der Prozeßdruck wird auf 10-50 mbar eingestellt. Zur Sicherstellung der Porenfreiheit wird der Beschichtungsprozeß mehrfach wiederholt, wobei nach Abkühlung der Druck in der Beschichtungskammer mindestens auf Normaldruck erhöht wird. Durch den Druckanstieg werden lose Partikel von der Substratoberfläche entfernt. Im Falle von rauhen Substratoberflächen findet vorzugsweise eine erneute Reinigung in Ethanol statt. Eine andere Möglichkeit besteht darin, einen 2. Bekeimungsschritt anstelle eines Reinigungsschrittes durchzuführen. Aufgrund der Bekeimung mit der Suspension findet einerseits eine Reinigung der Oberfläche statt. Andererseits wird im Falle der Verwendung von Ultraschallbädern eine mechanische Entfernung aller zu Poren führenden Partikel erreicht. Die zusätzliche Bekeimung sorgt andererseits dafür, daß alle noch nicht mit Diamant überwachsenen Stellen mit Diamantkeimen für den 2. Beschichtungsprozeß versehen werden. Anschließend wird ein weiterer Beschichtungsvorgang durchgeführt, bei dem die noch vorhandenen Poren geschlossen werden.

Für die folgenden Beispiele wurde eine ungeteilte Elektrolysezelle von 70 cm³ mit einem beheizbaren Umpumpkreislauf verwendet, eine diamantbeschichtete Elektrode nach Beispiel 1 und eine Edelstahlelektrode als Kathode. Die Temperierung erfolgte durch einen Intensivkühler, der an den Elektrolysekreislauf angeschlossen ist.

### Beispiel 2

### Oxidation von Cyclohexen:

5g Cyclohexen und 50g MTBS werden in 40g Methanol und 160g THF gelöst und bei einer Stromdichte von 11 mA/cm² beispielsweise mit einer gemäß Beispiel 1 hergestellten Elektrode elektrolysiert. Nach einer applizierten Ladungsmenge von 5 F erhält man 61% Monomethoxycyclohexen.

### Beispiel 3

### Oxidation von Cyclohexanon:

5g Cyclohexanon und 3g KI und 1g Wasser werden in 191g MeOH gelöst und bei einer Stromdichte von 11mA/cm² beispielsweise mit einer gemäß Beispiel 1 hergestellten Elektrode elektrolysiert. Nach einer applizierten Ladungsmenge von 3,4 F erhält man 89 % Dimethoxycyclohexanol.

### Beispiel 4

### Oxidation von Dimethylformamid (DMF):

5g DMF und 6g Natriumbenzolsulfonat werden in 190g Methanol gelöst und bei 25°C und 11 mA/cm² beispielsweise mit einer gemäß Beispiel 1 hergestellten Elektrode elektrolysiert. Nach einer applizierten Ladungsmenge von 2F wurden 96.4% N-Monomethoxymethyl-N'-methylformamid erhalten.

### Beispiel 5

### Oxidation von Tetrahydrofuran (THF):

5g THF und 6g Natriumbromid wurden in 190g Methanol gelöst und bei einer Stromdichte von 11 mA/dm² beispielsweise mit einer gemäß Beispiel 1 hergestellten Elektrode elektrolysiert. Nach einer applizierten Ladungsmenge von 8F wurden 12% an Monomethoxytetrahydofuran erhalten. Mit Natriumbenzolsulfonat erhält man mit 44 % nach 8F eine wesentlich bessere Ausbeute an Monomethoxytetrahydrofuran.

## Patentansprüche

1. Verfahren zur elektrochemischen Umsetzung mindestens einer organischen Verbindung, **dadurch gekennzeichnet, dass** die mindestens eine organische Verbindung mit einer Elektrode in Kontakt gebracht wird, die aus einem Grundkörper und einer auf dem Grundkörper aufgebrachten Diamantschicht besteht, wobei die Diamantschicht porenfrei ist und einen Borgehalt zwischen 10 ppm und 10000 ppm aufweist, und die Elektrode nach einem Verfahren herstellbar ist, das mindestens die folgenden Schritte umfasst:
(a) Reinigen der Oberfläche des Grundkörpers,
(b) Bekeimen der Oberfläche des Grundkörpers mit einer Diamantkeimdichte ≥ 10¹⁰/cm²,
(c) Beschichten der Oberfläche des Grundkörpers mit Diamant.

2. Verfahren nach Anspruch 1, **dadurch gekennzeichnet, dass** der Grundkörper eines oder mehrere der folgenden Materialien aufweist: Metall, Silicium, Silicide, Carbide und Boride.

3. Verfahren nach Anspruch 1 oder 2, **dadurch gekennzeichnet, dass** der Grundkörper einen Kern und eine auf dem Kern aufgebrachte Zwischenschicht umfasst.

4. Verfahren nach Anspruch 3, **dadurch gekennzeichnet, dass** der Kern Graphit oder Titan (Ti) oder Molybdän (Mo) oder Gold (Au) oder Silicium (Si) oder eine Kombination aus zwei oder mehr davon enthält.

5. Verfahren nach einem der Ansprüche 1 bis 4, **dadurch gekennzeichnet, dass** die Diamantschicht Bor in einem Bereich von 10 ppm bis 2000 ppm enthält.

6. Verfahren nach einem der Ansprüche 1 bis 5, **dadurch gekennzeichnet, dass** Schritt (c) mindestens einmal wiederholt wird.

7. Verfahren nach Anspruch 6, **dadurch gekennzeichnet, dass** Schritt (b) mindestens einmal wiederholt wird, wobei vor jeder Wiederholung von Schritt (b) die Oberfläche des Grundkörpers gereinigt wird.

8. Verfahren nach einem der Ansprüche 1 bis 7, **dadurch gekennzeichnet, dass** als organische Verbindungen solche mit oxidierbaren, reduzierbaren und funktionalisierbaren Gruppen eingesetzt werden.

9. Verfahren nach Anspruch 8, **dadurch gekennzeichnet, dass** die Umsetzung aus folgenden Reaktionen ausgewählt wird: Oxidation oder Dimerisierung mindestens einer aromatischen Verbindung; Methoxylierung oder Hydroxylierung mindestens einer Carbonylverbindung; Oxidation mindestens eines Alkohols und/oder mindestens einer Carbonlyverbindung zu mindestens einer Carbonsäure; Funktionalisierung mindestens eines Amids; und Reduktion, Oxidation oder Funktionalisierung mindestens einer heterozyklischen Verbindung.

10. Verfahren nach Anspruch 8 oder 9, **dadurch gekennzeichnet, dass** die zur elektrochemischen Umsetzung verwendete Spannung im Bereich von 1 bis 100 V, die übertragene Ladungsmenge im Bereich von 1 bis 10 F und die Temperatur im Bereich von 0 bis 100 °C liegt.

11. Verfahren nach Anspruch 10, **dadurch gekennzeichnet, dass** die elektrochemische Umsetzung in Gegenwart eines Hilfselektrolyten durchgeführt wird.

12. Verfahren nach Anspruch 11, **dadurch gekennzeichnet, dass** die elektrochemische Umsetzung unter Verwendung einer homogenen Lösung der umzusetzenden organischen Verbindung in einem Lösungsmittel, oder in einem 2-Phasensystem bestehend aus einer Phase enthaltend mindestens ein organisches Lösungsmittel und die umzusetzende organische Verbindung, und einer zweiten wasserhaltigen Phase, oder in Substanz durchgeführt wird.

13. Verfahren nach Anspruch 12, **dadurch gekennzeichnet, dass** die elektrochemische Umsetzung kontinuierlich oder diskontinuierlich durchgeführt wird.

## Claims

1. A process for the electrochemical reaction of at least one organic compound, wherein the at least one organic compound is brought into contact with an electrode consisting of a substrate and a diamond layer applied to the substrate, the diamond layer being pore-free and having a boron content of between 10 ppm and 10,000 ppm, and the electrode being able to be produced by a process which comprises at least the following steps:
a) cleaning the surface of the substrate;
b) seeding the surface of the substrate at a diamond nucleation density ≥ 10¹⁰/cm²;
c) coating the surface of the substrate with diamond.

2. A process as claimed in claim 1, wherein the substrate has one or more of the following materials: metal, silicon, silicides, carbides and borides.

3. A process as claimed in claim 1 or 2, wherein the substrate comprises a core and an intermediate layer applied onto the core.

4. A process as claimed in claim 3, wherein the core comprises graphite or titanium (Ti) or molybdenum (Mo) or gold (Au) or silicon (Si) or a combination of two or more thereof.

5. A process as claimed in one of claims 1 to 4, wherein the boron content of the diamond layer is in a range from 10 ppm to 2000 ppm.

6. A process as claimed in one of claims 1 to 5, wherein step c) is repeated at least once.

7. A process as claimed in claim 6, wherein step b) is repeated at least once, the surface of the substrate being cleaned prior to each repetition of step b).

8. A process as claimed in one of claims 1 to 7, wherein the organic compounds are those having oxidizable, reducible and functionalizable groups.

9. A process as claimed in claim 8, wherein the reaction is selected from the following reactions: oxidation or dimerization of at least one aromatic compound; methoxylation or hydroxylation of at least one carbonyl compound; oxidation of at least one alcohol and/or of at least one carbonyl compound to at least one carboxylic acid; functionalization of at least one amide; and reduction, oxidation or functionalization of at least one heterocyclic compound.

10. A process as claimed in claim 8 or 9, wherein the voltage used for the electrochemical reaction is in the range from 1 to 100 V, the amount of charge transferred is in the range from 1 to 10 F and the temperature is in the range from 0 to 100°C.

11. A process as claimed in claim 10, wherein the electrochemical reaction is carried out in the presence of an auxiliary electrolyte.

12. A process as claimed in claim 11, wherein the electrochemical reaction is carried out using a homogeneous solution of the organic compound to be reacted in a solvent, or in a 2-phase system consisting of one phase comprising at least one organic solvent and the organic compound to be reacted and a second aqueous phase, or is carried out in the absence of solvent.

13. A process as claimed in claim 12, wherein the electrochemical reaction is carried out continuously or batchwise.

## Revendications

1. Procédé de conversion électrochimique d'au moins un composé organique, **caractérisé en ce qu'**il met en contact au moins un composé organique avec une électrode, qui comprend un corps faisant masse et une couche de diamant déposée sur le corps faisant masse, dans lequel la couche de diamant est non-poreuse et comporte une teneur en bore entre 10 ppm et 10000 ppm, et que l'électrode peut être fabriquée suivant un procédé qui comprend au moins les étapes suivantes :
(a) nettoyage de la surface du corps faisant masse,
(b) germination de la surface du corps faisant masse avec une densité de germe supérieure ou égale à 10¹⁰ /cm²,
(c) dépôt d'une couche de diamant sur la surface du corps faisant masse.

2. Procédé selon la revendication 1, **caractérisé en ce que** le corps faisant masse comprend un ou plusieurs des matériaux suivants : métal, silicium, siliciure, carbure et borure.

3. Procédé selon la revendication 1 ou 2, **caractérisé en ce que** le corps faisant masse comprend un noyau et une couche intermédiaire déposée sur le noyau.

4. Procédé selon la revendication 3, **caractérisé en ce que** le noyau comprend du titane (Ti) ou du molybdène (Mo) ou de l'or (Au) ou du silicium (Si) ou une combinaison de deux ou plus de ceux-ci.

5. Procédé selon l'une quelconque des revendications de 1 à 4, **caractérisé en ce que** la couche de diamant comprend du bore dans une plage de 10 ppm à 2000 ppm.

6. Procédé selon l'une quelconque des revendications de 1 à 5, **caractérisé en ce que** l'étape (c) est répétée au moins une fois.

7. Procédé selon la revendication 6, **caractérisé en ce que** l'étape (b) est répétée au moins une fois, dans lequel avant chaque répétition de l'étape (b) la surface du corps faisant masse est nettoyée.

8. Procédé selon l'une quelconque des revendications de 1 à 7, **caractérisé en ce que** les composés organiques utilisés sont tels qu'ils comprennent des groupes que l'on peut oxyder, réduire, fonctionnaliser.

9. Procédé selon la revendication 8, **caractérisé en ce que** la conversion est choisie parmi les réactions suivantes : l'oxydation ou la dimérisation d'au mois un composé aromatique ; la méthoxylation ou l'hydroxylation d'au moins un composé carbonyle ; l'oxydation d'au moins un alcool et/ou d'au moins un composé carbonyle en au moins un acide carbonique ; la fonctionnalisation d'au moins un amide ; et la réduction, l'oxydation et la fonctionnalisation d'au moins un composé hétérocyclique.

10. Procédé selon la revendication 8 ou la revendication 9, **caractérisé en ce que** la tension utilisée pour la conversion électrochimique se situe dans une plage de 1 Volt à 100 Volts, la quantité de charge transférée se situe dans une plage de 1 Faraday à 10 Faraday et la température se situe dans une plage de 0 °C à 100 °C.

11. Procédé selon la revendication 10, **caractérisé en ce que** la conversion électrochimique est réalisée en présence d'un électrolyte auxiliaire.

12. Procédé selon la revendication 11, **caractérisé en ce que** la conversion électrochimique est réalisée en utilisant une solution homogène du composé organique à convertir dans un milieu solvant, ou un système à deux phases comprenant une phase contenant au moins un milieu solvant organique et le composé organique à convertir, et une deuxième phase aqueuse, ou sous forme solide.

13. Procédé selon la revendication 12, **caractérisé en ce que** la conversion électrochimique est réalisée de façon continue ou discontinue.
